# EUROPÄISCHE PATENTSCHRIFT

(11) **EP 3 609 746 B1**
(45) Veröffentlichungstag und Bekanntmachung des Hinweises auf die Patenterteilung: **13.10.2021**
(21) Anmeldenummer: 18704151.2
(22) Anmeldetag: 19.01.2018
(51) Int. Cl.: B60S 1/48, B60S 1/56

(54) **REINIGUNGSSYSTEM ZUM REINIGEN EINES TRANSPARENTEN ELEMENTS FÜR EIN KRAFTFAHRZEUG**
CLEANING SYSTEM FOR CLEANING A TRANSPARENT ELEMENT FOR A MOTOR VEHICLE
SYSTÈME DE NETTOYAGE POUR LE NETTOYAGE D'UN ÉLÉMENT TRANSPARENT POUR UN VÉHICULE À MOTEUR

(30) Priorität: 13.04.2017 DE 102017206454
(43) Veröffentlichungstag der Anmeldung: 19.02.2020
(73) Patentinhaber: Continental Automotive GmbH, 30165 Hannover (DE)
(72) Erfinder: HAHN, Torsten, 34576 Homberg (DE)
(74) Vertreter: Continental Corporation
(86) Internationale Anmeldenummer: PCT/EP2018/051316
(87) Internationale Veröffentlichungsnummer: WO 2018/188823

(56) Entgegenhaltungen:
- DE-A1- 10 115 975
- DE-A1-102016 006 039
- FR-A1- 2 957 878
- GB-A- 1 376 635
- US-A1- 2013 092 758
- US-A1- 2015 343 999

## Beschreibung

Die Erfindung betrifft ein Reinigungssystem für ein Fahrzeug, insbesondere zum Reinigen eines transparenten Elements einer optischen oder optoelektronischen Vorrichtung, ein Verfahren zum Betrieb des Reinigungssystems sowie ein mit dem Reinigungssystem ausgestattetes Fahrzeug.

Neben Sichtscheiben und Scheinwerfergläsern werden bei modernen Fahrzeugen zunehmend Assistenzsysteme mit Sensoren eingesetzt, die den Fahrzeugnutzer beim Fahren des Fahrzeuges unterstützen und dabei die Umgebung des Fahrzeugs jederzeit zuverlässig erfassen und überwachen sollen. Derartige Assistenzsysteme beinhalten hierfür optischen oder optoelektronischen Vorrichtungen wie beispielsweise Kameras, laserbasierten Abstandssensoren (LiDARe) oder Infrarotsensoren. Derartige Vorrichtungen verfügen über transparente Elemente wie Linsen oder Abdeckungen, welche das Licht je nach Anwendungsfall uneingeschränkt oder in einem bestimmten eingeschränkten Wellenbereich durchlassen, funktionsbedingt im Außenbereich des Fahrzeugs angeordnet, daher Verschmutzung und äußeren Witterungseinflüssen ausgesetzt und zur Funktionsgewährleistung bei Bedarf gereinigt oder enteist werden müssen.

Je nach Witterung und Verschmutzungssituation müssen Reinigungszyklen gegebenenfalls besonders oft frequentiert durchgeführt werden. Dabei ist es naheliegend, dass ein stetiger Wunsch besteht, mit dem begrenzten Volumen der mitgeführten Reinigungsflüssigkeit maximal viele Reinigungszyklen erzielen zu können.

Es sind generell Reinigungssysteme mit schaltbaren elektromotorisch antreibbaren Fördervorrichtungen bekannt, bei denen die eingeschaltete Fördervorrichtung eine Reinigungsflüssigkeit aus einem Vorratsbehälter über hydraulische Leitungen unter Druck zu einer oder mehreren Düsen fördert. Als Fördervorrichtungen werden dabei üblicherweise kostengünstige Strömungspumpen wie beispielsweise Schaufelradpumpen verwendet. Als Nachteil wird dabei angesehen, dass wenn der Reinigungsflüssigkeitsbedarf über die Pumpenlaufzeit eingestellt, beim Pumpenhochlauf nach dem Einschalten, sowie beim Nachlauf nach dem Ausschalten konstruktionsbedingt undefinierten Mengen an Reinigungsflüssigkeit mit einem suboptimalen Druck gefördert werden und dadurch der Verbrauch erhöht und der Wirkungsgrad und Effizienz verringert werden.

Ein weiterer Nachteil derartiger bekannten Reinigungssysteme ist die Abhängigkeit der Fördermenge vom verwendeten Fluid und der jeweiligen Temperatur, welche insbesondere aus den unterschiedlichen Dichten der saisonal angepasst eingesetzten Reinigungsflüssigkeiten resultiert.

Wird beispielsweise im Sommer mit Leitungswasser eine kurze Pumpenbestromungszeit gefunden, welche eine gute Reinigung bei einem minimierten Verbrauch verspricht, ist bei gleicher Pumpenbestromungszeit im Winter mit einem weniger dichten Wasser-Alkoholgemisch keine Reinigung mehr möglich, weil nicht ausreichen Flüssigkeit gefördert wird.

Aus US 2015/343999 A1 ist ein Reinigungssystem bekannt, bei der in einer Düseneinheit zwei einzelne, durch eine Kontrolleinheit gesteuerte elektrisches Schaltventile verbaut sind, von denen ein erster Schaltventil einen zu einer ersten Düse führenden Flüssigkeitsschlauch das andere Schaltventil einen zu einer zweiten Düse führenden Luftschlauch gezielt absperren kann. Aus GB 1 376 635 A ist ein weiteres Reinigungssystem bekannt in dem die Waschflüssigkeit mehreren Düsen über ein gemeinsames Verteilerorgan einzeln oder gruppenweise zugeleitet wird. In dem Verteilerorgan sind mehrere schaltbare Ventile zusammengefasst, welche durch ein mit einer elektronischen Verzögerungsschaltung ausgestatteten und vom Fahrer bedienbaren Schalter gesteuert werden.

Ein hoher Bauraumbedarf sowie eine komplexe Montage und Leitungsverlegung werden bei dieser Lösung als verbesserungswürdig angesehen.

Vor diesem Hintergrund liegt der Erfindung die Aufgabe zugrunde, ein verbessertes Reinigungssystem bereitzustellen, die eine effektive Reinigung möglichst verzögerungsfrei sowie mit einem gegenüber dem Stand der Technik reduzierten Reinigungsmittelverbrauch, Bauraum- und Montageaufwand ermöglicht.

Diese Aufgabe wird durch die Merkmale der unabhängigen Ansprüche gelöst. Weiterbildungen und verschiedene Ausführungsbeispiele der Erfindung ergeben sich aus den Unteransprüchen und der nachfolgenden Beschreibung und Figuren.

Die Erfindung sieht vor, dass mehrere Schaltventile in einem Ventilblock zusammengefasst und mit einer gemeinsamen Schnittstelle zur elektrischen Energieversorgung und Ansteuerung ausgestattet werden. Gemäß einer bevorzugten Weiterbildung kann der Ventilblock dabei möglichst nahe der Fördereinrichtung, insbesondere in einem gemeinsamen Gehäuse positioniert werden.

Dadurch kann der im Fahrzeug vorhandene Bauraum effektiv ausgenutzt, Länge von elektrischen Leitungen und Einsatz von Kupfer reduziert sowie die Montage erheblich vereinfacht werden.

Ein derartiges Reinigungssystem ist besonders gut zur Erzeugung von kurzintervalligen Spritzstößen geeignet, womit eine effektive Reinigung mit einem reduzierten Reinigungsmittelverbrauch ermöglicht wird. Gemäß einer vorteilhaften Weiterbildung kann Reinigungssystem mit einem vorteilhaften Verfahren betrieben werden, indem ein Vorlaufen der Fördereinrichtung bei einem noch geschlossenen Schaltventil initiiert werden kann und das Schaltventil erst nach dem Aufbau eines optimalen Betriebsdrucks in der hydraulischen Verbindung kurzzeitig, bei Bedarf auch mehrfach hintereinander betätigt wird und dadurch kurze Sprühstöße erzeugt werden. Für einen besonders hohen Wirkungsgrad wird für einen einzelnen Sprühstoß ein Zeitintervall in einem Bereich kleiner als 1 Sekunde, vorzugsweise zwischen 0,1 Sekunden und 0,5 Sekunden gewählt.

Dadurch wird das System für die Reinigung von transparenten Komponenten wie Objektivlinsen oder Schutzgläser von optischen oder optoelektronischen Erfassungsvorrichtungen wie Kameras oder LiDARe, welche sicherheitsbedingt eine hoch frequentierte Reinigung benötigen, geeignet.

Gemäß einer weiteren vorteilhaften Weiterbildung wird die Fördereinrichtung und, je nach Anzahl, das oder die Schaltventile durch eine elektronische Steuereinheit angesteuert. Damit kann eine besonders sichere, effektive und bedarfsgerecht sparsame adaptive Steuerung des Reinigungssystems in Abhängigkeit von tatsächlich vorliegenden Betriebsbedingungen realisiert werden.

Eine erste erfindungsgemäße Ausführungsform des Reinigungssystems sieht vor, dass ein einzelnes Schaltventil möglichst näher an der Austrittsöffnung angeordnet sein soll. Durch die kurze Distanz zur Austrittsöffnung können etwaige Bläheffekte von Schlauchleitungen verhindert werden, die einen verzögerten Druckaufbau sowie ein Nachspritzen nach Abschaltung der Fördervorrichtung bewirken würden.

Gemäß einer weiteren bevorzugten weil montagefreundlichen und universell einsetzbaren Ausführungsform kann eine oder mehrere die Austrittsöffnungen mit einem zugehörigen Schaltventil in einem gemeinsamen Gehäuse einer Düseneinheit zusammengefasst angeordnet werden. In der besonders vorteilhaften Weiterbildung wird eine Erfassungsvorrichtung mit der zur reinigenden transparenten Komponenten ebenfalls in der Düseneinheit verbaut. Eine nächste Weiterbildung sieht vor, dass die Düseneinheit auch ein Heizelement zum direkten oder indirekten beheizen der Austrittsöffnung und der Erfassungsvorrichtung aufweist.

Die Erfindung betrifft weiterhin ein Fahrzeug in dem das erfindungsgemäße Reinigungssystem verbaut ist.

Die vorliegende Erfindung wird nachfolgend anhand der in den Figuren vereinfacht dargestellten Ausführungsbeispiele näher erläutert. Hierbei zeigt:
Fig.1 eine erste Ausführungsform des Reinigungssystems.
Fig.2 eine zweite Ausführungsform des erfindungsgemäßem Reinigungssystems mit in einem Ventilblock zusammengefasten Schaltventilen.
Fig.3 hydraulische Komponenten einer dritten Ausführungsform des erfindungsgemäßen Reinigungssystems kombinierten Düseneinheiten, wobei die elektrischen Komponenten nicht dargestellt sind.
Fig.4 eine Ausführungsform der erfindungsgemäßen Düseneinheit mit einer eingesetzten Erfassungsvorrichtung und einem integrierten Schaltventil.

In allen Figuren sind die gleichen bzw. äquivalenten Elemente und Vorrichtungen, sofern nichts anderes angegeben, mit denselben Bezugszeichen versehen.

### Fig.1

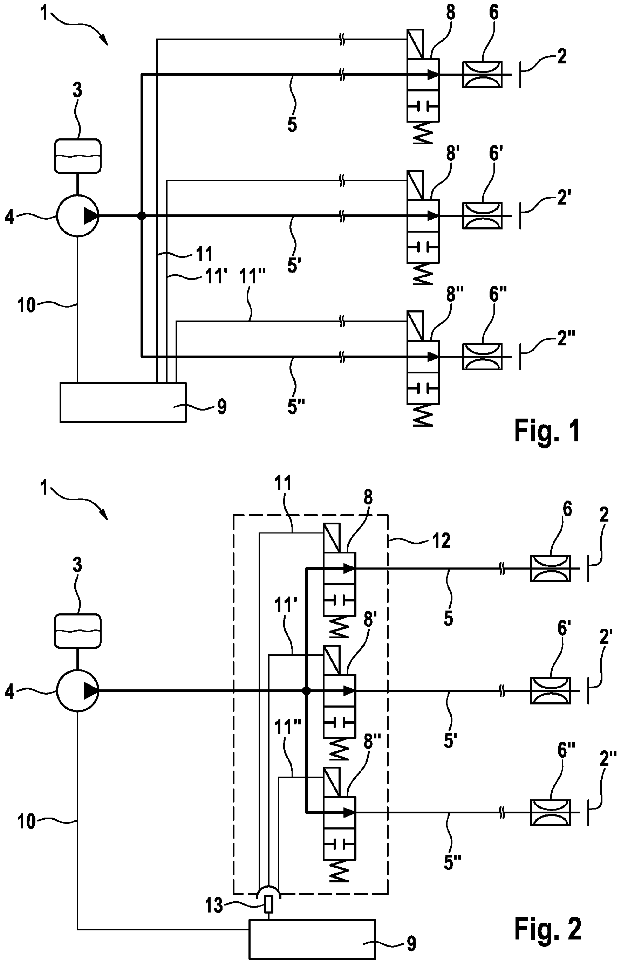

Fig.1 zeigt eine erste Ausführungsform des Reinigungssystems 1.

Das Reinigungssystem 1 ist zum Einbau in einem Fahrzeug und zum Reinigen eines transparenten Elements 2 vorgesehen.

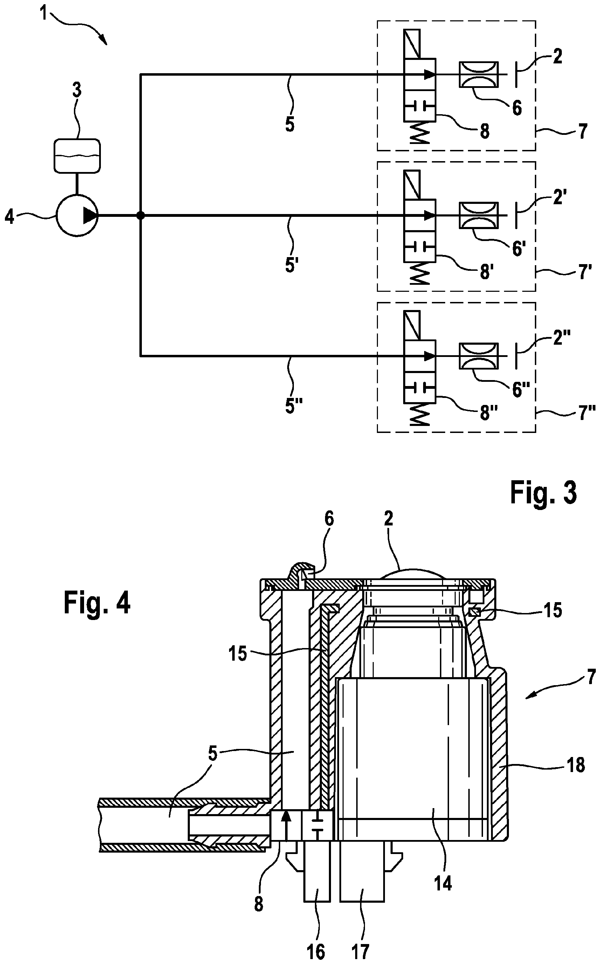

Als transparentes Element 2 ist insbesondere eine Komponente wie eine Objektivlinse oder Abdeckglas einer optischen oder optoelektronischen, in der Fig. 4 beispielhaft dargestellten Erfassungsvorrichtung 14 wie beispielsweise einer Kamera oder eines LiDARs geeignet, wobei auch die Sichtscheiben oder Scheinwerfergläser ebenso zulässig sind.

Die Reinigung erfolgt mit einem fluiden Reinigungsmittel, beispielsweise reinem Wasser, einem Wassergemisch oder einem Wasser-Gas-Gemisch. Das Reinigungsmittel ist im Fahrzeug in einem geeigneten Vorratsbehälter 3 aufbewahrt.

Eine elektrisch ansteuerbare, vorzugsweise elektromotorisch angetriebene Fördereinrichtung 4, vorzugsweise eine Strömungspumpe, befördert das Reinigungsmittel aus dem Vorratsbehälter unter Druck durch die hydraulischen Verbindungen 5, 5', 5" zu den Austrittsöffnungen 6, 6', 6", welche das Reinigungsmittel auf die transparenten Elemente 2, 2', 2" versprühen. Eine Austrittsöffnung 6 kann innerhalb der Erfindung beliebig gestaltet werden - beispielsweise als eine Bohrung, eine Düse, ein Deflektor und Dergleichen. Die hydraulische Verbindungen 5, 5', 5" können innerhalb der Erfindung als übliche Schlauchleitungen ausgeführt werden, welche vorzugsweise jedoch möglichst druckfest ausgebildet sein sollen.

Jeder Austrittsöffnung 6, 6', 6" ist jeweils ein elektrisch betätigbares Schaltventil 8, 8', 8" vorgesetzt, welches in seiner geschlossenen Stellung die hydraulische Verbindung 5 zwischen der Fördereinrichtung 4 und der Austrittsöffnung 6, 6', 6" sperrt und in seiner geöffneten Stellung freigibt. Das Schaltventil 8 ist vorzugsweise stromlos offen ausgebildet, wobei eine stromlos geschlossene Ausführung mit einer entsprechenden Anpassung des Ansteuerungsverfahrens auch zulässig ist. Bei der gezeigten Ausführungsform soll das Schaltventil 8 8, 8', 8" entlang des Verlaufs der jeweiligen hydraulischen Verbindung 5, 5', 5" so nah wie konstruktiv sinnvoll möglich an der jeweiligen Austrittsöffnung 6, 6', 6" positioniert werden um unerwünschte Effekte wie etwaige Bläheffekte von Schlauchleitungen, die einen verzögerten Druckaufbau sowie ein Nachspritzen nach Abschaltung der Fördereinrichtung 4 bewirken.

Die Fördereinrichtung 4 und die Schaltventile 8, 8', 8" werden durch eine elektronische Steuereinheit 9 angesteuert und Vorzugsweise auch mit der benötigten elektrischen Energie versorgt. Die Anbindung erfolgt dabei über eine elektrische Steuerleitung 10 beziehungsweise elektrische Verbindungsleitungen 11, 11', 11", welche innerhalb der Erfindung sowohl gesondert vorliegen, als auch in ein übliches Kraftfahrzeug-Bussystem wie CAN oder LIN integriert werden. Ebenso kann die elektronische Steuereinheit 9 als ein gesondertes Reinigungssteuergerät ausgebildet oder als eine Body-Control-Unit, bei der die Steuerung des Reinigungssystems lediglich eine Unterfunktion ist.

Bei Betrieb des Reinigungssystems 1 wird zunächst das Schaltventil 8 in die geschlossenen Stellung geschaltet, sofern es sich nicht bereits darin befindet. Danach wird die Fördereinrichtung 4 aktiviert wird, so das in der hydraulischen Verbindung 5 vor dem Schaltventil 8 ein definierter Betriebsdruck aufgebaut wird. Danach wird das Schaltventil 8 für ein definiert kurzes Zeitintervall geöffnet und dann wieder verschlossen. Je nach Länge der hydraulischen Verbindung und den betriebsdruck kann die Fördereinrichtung bereits vor Ablauf des Zeitintervalls abgeschaltet werden.

Die Einstellung des Zeitinterwalls kann in der elektronischen Steuereinheit 9 entweder einfach anhand vordefinierter und abgespeicherter Werte erfolgen oder adaptiv berechnet werden, wobei je nach Ausbaustufe der Steuereinheit 9 verschiedene relevanten Faktoren wie beispielsweise die aktuelle Außentemperatur, das Gefrierpunkt des Reinigungsmittels, die Fahrzeuggeschwindigkeit, die Luftfeuchtigkeit und Dergleichen für die Berechnung herangezogen werden können.

### Fig.2

In der Fig.2 ist eine zweite Ausführungsform des erfindungsgemäßen Reinigungssystems 1 dargestellt. Im Unterscheid zu der vorstehend beschriebenen Ausführung sind hier mehrere Schaltventile 8, 8', 8" in einem Ventilblock 12 zusammengefasst angeordnet, welcher eine einzige gemeinsame elektrische Schnittstelle 13 aufweist in der die einzelne Steuerleitungen 11, 11', 11" zur Steuerung der Schaltventile 8, 8' sind, gebündelt sind. Der Ventilblock 12 ist dabei hydraulisch wesentlich näher zu der Fördereinrichtung 4 angeordnet, als die einzelnen Schaltventile in der Ausführungsform nach Fig.1.

### Fig.3

Von der dritten Ausführungsform des erfindungsgemäßen Reinigungssystems 1 ist in der Fig.3 lediglich der hydraulische Anteil gezeigt. Die einzelnen Schaltventile 8, 8', 8" und die zugehörigen Austrittsöffnungen 6, 6', 6" sind jeweils in einer Düseneinheit 7, 7', 7" in einem gemeinsamen Gehäuse (Bezugszeichen 18 siehe Fig.4) zusammengefasst angeordnet.

Die vorstehend beschriebenen Ausführungsbeispiele sind jeweils zum Reinigen von 3 transparenten Elementen 2, 2', 2" ausgelegt. Diese Konfiguration ist lediglich beispielhaft und nicht abschließend, innerhalb der Erfindung kann das Reinigungssystem nach einem oder durch Kombination verschiedener gezeigter Aufbauprinzipien ebenso für eine beliebige abweichende Anzahl von transpatenten Elementen adaptiert werden.

### Fig.4

Fig.4 zeigt beispielhaft eine mögliche Ausführung einer erfindungsgemäßen Düseneinheit 7 in Schnittdarstellung.

Die Düseneinheit 7 weist ein Gehäuse 18 auf, in dem die Austrittsöffnung 6. Ein Teilabschnitt der hydraulischen Verbindung 5 und das Schaltventil 8 angeordnet beziehungsweise integriert sind. Das Gehäuse 18 kann vorzugsweise aus Kunststoff, insbesondere durch ein Spritzgussverfahren hergestellt sein.

Das transparente Element 2 ist hier eine Komponente einer optischen oder optoelektronischen Erfassungsvorrichtung 14, welche ebenfalls in dem Gehäuse 18 angeordnet ist, so dass bei der gezeigten Ausführungsform das zu reinigende transparente Element 2 ebenfalls ein Bestandteil der Düseneinheit 7 ist. Des Weiteren weist die Düseneinheit 7 ein Heizelement 15 auf, mit dem ein Teilabschnitt der hydraulischen Verbindung 5, und zumindest ein Bereich des Gehäuses 18 erwärmt werden können, um eine Vereisung der Austrittsöffnung 7 sowie ein Beschlagen des Elements 2 zu verhindern und die Erfassungsvorrichtung 14 in einem optimalen Betriebstemperaturbereich zu halten.

Das Heizelement 15 kann innerhalb der Erfindung wie dargestellt in das Gehäuse 18 der Düseneinheit 7 integriert, insbesondere eingespritzt ausgebildet sein, jedoch auch lediglich eingelegt, beispielsweise als ein Heizdraht innerhalb der hydraulischen Verbindung 5 vorgesehen.

Des Weiteren ist an dem Gehäuse 18 eine Düseneinheitsschnittstelle 16 zur Steuerung und Energieversorgung des Schaltventils 8 und des Heizelements 15 ausgebildet und an der Erfassungsvorrichtung 14 eine Erfassungsvorrichtungsschnittstelle 17. Vorzugsweise sollen die beiden Schnittstellen 16,17 möglichst nahe beieinander angeordnet oder zu einer einzigen Schnittstelle zusammengeführt werden, damit auf der Gegenseite ein einziger Stecker verwendet werden kann.

Die Einzelnen Merkmale der dargestellten Ausführungsformen sind durch ihre jeweiligen gezeigten Kombinationen nicht zwangsweise eingeschränkt, sondern können innerhalb der Erfindung beliebig miteinander kombiniert werden um weitere, hier nicht explizit gezeigten Ausführungsformen zu bilden, ohne die Erfindung zu verlassen. Die Erfindung wird durch die Ansprüche definiert.

### Bezugszeichenliste

- 1: Reinigungssystem
- 2: Transparentes Element
- 3: Vorratsbehälter
- 4: Fördereinrichtung
- 5: Hydraulische Verbindung
- 6: Austrittsöffnung
- 7: Düseneinheit
- 8: Schaltventil
- 9: Elektronische Steuereinheit
- 10: Elektrische Steuerleitung
- 11: Elektrische Verbindungsleitung
- 12: Ventilblock
- 13: Elektrische Schnittstelle
- 14: Optische oder optoelektronische Erfassungsvorrichtung
- 15: Heizelement
- 16: Düseneinheitsschnittstelle
- 17: Erfassungsvorrichtungsschnittstelle
- 18: Gehäuse

## Patentansprüche

1. Reinigungssystem (1) zum Einbau in einem Fahrzeug zum Reinigen eines transparenten Elements (2) mit einem fluiden Reinigungsmittel, welches in wenigstens einem Vorratsbehälter (3) aufbewahrt ist, umfassend wenigstens eine Fördereinrichtung (4), welche das Reinigungsmittel über eine hydraulische Verbindung (5) zu einer Austrittsöffnung (6) zum verteilen des Reinigungsmittels auf dem transparenten Element (2) fördert, wobei wenigstens ein elektrisch betätigbares Schaltventil (8) vorgesehen ist, welches in einer geschlossenen Stellung die hydraulische Verbindung (5) zwischen der Fördereinrichtung (4) und der Austrittsöffnung (6) sperrt und in einer geöffneten Stellung freigibt, wobei wenigstens zwei Schaltventile (8, 8') in einem Ventilblock (12) zusammengefasst sind und wobei die Fördereinrichtung (4) über eine elektrische Steuerleitung (10) und jedes Schaltventil (8) über eine elektrische Verbindungsleitung (11) durch eine elektronische Steuereinheit (9) steuerbar sind, **dadurch gekennzeichnet, dass** einzelne Verbindungsleitungen (11,11') zur Steuerung der Schaltventile (8, 8') in einer gemeinsamen elektrischen Schnittstelle (13) zusammengefasst sind, welche am Ventilblock (12) angeordnet ist.

2. Reinigungssystem (1) nach Anspruch 1 **dadurch gekennzeichnet, dass** das wenigstens ein Schaltventil (8) entlang eines Verlaufs der hydraulischen Verbindung (5) wesentlich näher zu der Austrittsöffnung (6) als zu der Fördereinrichtung (4), insbesondere der Austrittsöffnung (6) unmittelbar vorgelagert, angeordnet ist.

3. Reinigungssystem (1) nach wenigstens einem der vorstehenden Ansprüche **dadurch gekennzeichnet, dass** der Ventilblock (12) entlang eines Verlaufs der hydraulischen Verbindung (5) wesentlich näher zu der Fördereinrichtung (4) als zu der Austrittsöffnung (6) angeordnet ist.

4. Reinigungssystem (1) nach wenigstens einem der vorstehenden Ansprühe **dadurch gekennzeichnet, dass** wenigstens ein transparentes Element (2) eine Komponente einer optischen oder optoelektronischen Erfassungsvorrichtung (14) ist.

5. Reinigungssystem (1) nach Anspruch 4 **dadurch gekennzeichnet, dass** die Austrittsöffnung (6) und die Erfassungsvorrichtung (14) in einer Düseneinheit (7) zusammengefasst angeordnet sind.

6. Reinigungssystem (1) nach Anspruch 5 **dadurch gekennzeichnet, dass** das Schaltventil (8) in der Düseneinheit (7) angeordnet ist.

7. Reinigungssystem (1) nach Anspruch 5 oder 6 **dadurch gekennzeichnet, dass** das die Düseneinheit (7) ein Heizelement (15) zum direkten oder indirekten beheizen der Austrittsöffnung (6) und der Erfassungsvorrichtung (14) aufweist.

8. Verfahren zum Beitrieben des Reinigungssystems (1) nach wenigstens einem der Ansprüche 1 bis 7 **dadurch gekennzeichnet, dass:**
• in einem ersten Schritt sichergestellt wird, dass ein der Schaltventile (8) sich in der geschlossenen Stellung befindet,
• in einem zweiten Schritt die Fördereinrichtung (4) aktiviert wird, so dass einem Bereich der hydraulischen Verbindung (5) zwischen der Fördereinrichtung (4) und Schaltventil (8) das Reinigungsmittel oberhalb eines definierten Mindestdrucks vorliegt,
• in einem dritten Schritt das Schaltventil (8) für einen definierten Zeitintervall, insbesondere in einem Bereich kleiner als 1 Sekunde, vorzugsweise zwischen 0,1 Sekunden und 0,5 Sekunden, in die geöffnete Stellung versetzt wird.

9. Verfahren nach Anspruch 8 **dadurch gekennzeichnet, dass** die Festlegung des Zeitintervalls in Abhängigkeit von Temperaturinformationen erfolgt, insbesondere einer Außentemperatur und einem Gefrierpunkt des Reinigungsmittels.

10. Fahrzeug in dem ein Reinigungssystem (1) nach wenigstens einem der Ansprüche 1 bis 7 verbaut ist.

## Claims

1. Cleaning system (1) for installation in a vehicle, for cleaning a transparent element (2) with a fluid cleaning agent which is kept in at least one reservoir (3), comprising at least one conveying device (4), which conveys the cleaning agent via a hydraulic connection (5) to an outlet opening (6) for distributing the cleaning agent on the transparent element (2), wherein at least one electrically actuatable switching valve (8) is provided, which in a closed position blocks the hydraulic connection (5) between the conveying device (4) and the outlet opening (6) and in an open position releases it, wherein at least two switching valves (8, 8') are combined in a valve block (12) and wherein the conveying device (4) can be controlled by way of an electrical control line (10) and each switching valve (8) can be controlled by way of an electrical connecting line (11) by an electronic control unit (9), **characterized in that** individual connecting lines (11, 11') for controlling the switching valves (8, 8') are combined in a common electrical interface (13), which is arranged on the valve block (12).

2. Cleaning system (1) according to Claim 1, **characterized in that** at least one switching valve (8) is arranged significantly closer to the outlet opening (6) than to the conveying device (4), in particular directly upstream of the outlet opening (6), along a course of the hydraulic connection (5).

3. Cleaning system (1) according to at least one of the preceding claims, **characterized in that** the valve block (12) is arranged significantly closer to the conveying device (4) than to the outlet opening (6) along a course of the hydraulic connection (5).

4. Cleaning system (1) according to one of the preceding claims, **characterized in that** at least one transparent element (2) is a component of an optical or optoelectronic recording device (14).

5. Cleaning system (1) according to Claim 4, **characterized in that** the outlet opening (6) and the recording device (14) are arranged such that they are combined in a nozzle unit (7).

6. Cleaning system (1) according to Claim 5, **characterized in that** the switching valve (8) is arranged in the nozzle unit (7).

7. Cleaning system (1) according to Claim 5 or 6, **characterized in that** the nozzle unit (7) has a heating element (15) for directly or indirectly heating the outlet opening (6) and the recording device (14).

8. Method for operating the cleaning system (1) according to at least one of Claims 1 to 7, **characterized in that**:
• in a first step, it is ensured that one of the switching valves (8) is in the closed position,
• in a second step, the conveying device (4) is activated, so that in a region of the hydraulic connection (5) between the conveying device (4) and the switching valve (8) the cleaning agent is above a defined minimum pressure,
• in a third step, the switching valve (8) is brought into the open position for a defined time interval, in particular in a range of less than 1 second, preferably between 0.1 of a second and 0.5 of a second.

9. Method according to Claim 8, **characterized in that** the time interval is set according to temperature information, in particular an outside temperature and a freezing point of the cleaning agent.

10. Vehicle in which a cleaning system (1) according to at least one of Claims 1 to 7 is installed.

## Revendications

1. Système de nettoyage (1) destiné à être monté dans un véhicule pour le nettoyage d'un élément transparent (2) avec un produit de nettoyage fluide, qui est conservé dans au moins un réservoir (3), comprenant au moins un appareil de transport (4), qui transporte le produit de nettoyage par le biais d'un raccordement hydraulique (5) jusqu'à une ouverture de sortie (6), pour la distribution du produit de nettoyage sur l'élément transparent (2), au moins une soupape de commutation actionnable électriquement (8) étant prévue, qui, dans une position fermée, bloque le raccordement hydraulique (5) entre l'appareil de transport (4) et l'ouverture de sortie (6) et le dégage dans une position ouverte, au moins deux soupapes de commutation (8, 8') étant regroupées dans un bloc de soupapes (12) et l'appareil de transport (4) pouvant être commandé par l'intermédiaire d'une ligne de commande électrique (10) et chaque soupape de commutation (8) pouvant être commandée par l'intermédiaire d'une ligne de raccordement électrique (11) par une unité de commande électronique (9), **caractérisé en ce que** des lignes de raccordement individuelles (11, 11') pour la commande des soupapes de commutation (8, 8') sont regroupées dans un point de jonction électrique commun (13), qui est agencé sur le bloc de soupapes (12).

2. Système de nettoyage (1) selon la revendication 1, **caractérisé en ce que** l'au moins une soupape de commutation (8) est agencée le long d'une étendue du raccordement hydraulique (5) sensiblement plus près de l'ouverture de sortie (6) que de l'appareil de transport (4), notamment directement en amont de l'ouverture de sortie (6).

3. Système de nettoyage (1) selon au moins l'une quelconque des revendications précédentes, **caractérisé en ce que** le bloc de soupapes (12) est agencé le long d'une étendue du raccordement hydraulique (5) sensiblement plus près de l'appareil de transport (4) que de l'ouverture de sortie (6).

4. Système de nettoyage (1) selon au moins l'une quelconque des revendications précédentes, **caractérisé en ce que** l'au moins un élément transparent (2) est un composant d'un dispositif d'acquisition optique ou optoélectronique (14).

5. Système de nettoyage (1) selon la revendication 4, **caractérisé en ce que** l'ouverture de sortie (6) et le dispositif d'acquisition (14) sont agencés de manière regroupée dans une unité de buse (7).

6. Système de nettoyage (1) selon la revendication 5, **caractérisé en ce que** la soupape de commutation (8) est agencée dans l'unité de buse (7).

7. Système de nettoyage (1) selon la revendication 5 ou 6, **caractérisé en ce que** l'unité de buse (7) comprend un élément chauffant (15) pour le chauffage direct ou indirect de l'ouverture de sortie (6) et du dispositif d'acquisition (14).

8. Procédé d'exploitation du système de nettoyage (1) selon au moins l'une quelconque des revendications 1 à 7, **caractérisé en ce que**
- dans une première étape, il est vérifié qu'une des soupapes de commutation (8) se trouve dans la position fermée,
- dans une deuxième étape, l'appareil de transport (4) est activé, de telle sorte que le produit de nettoyage se trouve au-dessus d'une pression minimale définie dans une zone du raccordement hydraulique (5) entre l'appareil de transport (4) et la soupape de commutation (8),
- dans une troisième étape, la soupape de commutation (8) est amenée dans la position ouverte pendant un intervalle de temps défini, notamment dans une plage inférieure à 1 seconde, de préférence comprise entre 0,1 seconde et 0,5 seconde.

9. Procédé selon la revendication 8, **caractérisé en ce que** l'établissement de l'intervalle de temps a lieu en fonction d'informations de température, notamment d'une température extérieure et d'un point de congélation du produit de nettoyage.

10. Véhicule dans lequel un système de nettoyage (1) selon au moins l'une quelconque des revendications 1 à 7 est installé.
